# EUROPEAN PATENT APPLICATION

(11) **EP 4 516 539 A1**
(43) Date of publication of application: **05.03.2025**
(21) Application number: 23881358.8
(22) Date of filing: 28.07.2023
(51) Int. Cl.: B60H 1/00

(54) **AIR CONDITIONING SYSTEM AND AUTOMOBILE**

(30) Priority: 25.10.2022 CN 202211313745
(71) Applicant: ZHEJIANG ZEEKR INTELLIGENT TECHNOLOGY CO., LTD., 315000 Ningbo Zhejiang (CN); Zhejiang Geely Holding Group Co., Ltd., Hangzhou, Zhejiang 310000 (CN)
(72) Inventor: GAO, Shuai, Ningbo, Zhejiang 315000 (CN); TIAN, Jun, Ningbo, Zhejiang 315000 (CN); LIU, Chuang, Ningbo, Zhejiang 315000 (CN)
(74) Representative: Osterhoff, Utz
(86) International application number: PCT/CN2023/109956
(87) International publication number: WO 2024/087770

(57) **Abstract**

Disclosed is an air conditioning system, including a first heat exchange air duct (10), a second heat exchange air duct (40), and a circulating system. The first heat exchange air duct is provided with a built-in evaporator (11), a first air inlet end (12), and a first air outlet end (13), the first air inlet end is communicated with a fresh air inlet (30) outside a vehicle, and the first air outlet end is communicated with a first air outlet port (14) inside the vehicle; the second heat exchange air duct is provided with a built-in heater (41), a second air inlet end (42), and a second air outlet end (43), the second air inlet end is communicated with the fresh air inlet and/or the first air inlet end, and the second air outlet end is communicated with a second air outlet port (44) inside the vehicle; and the circulating system includes a circulation air inlet (20) respectively communicated with an interior of the vehicle, the first air inlet end, and/or the second air inlet end, so as to recycle an air after a heat exchange through the first heat exchange air duct and/or the second heat exchange air duct, and circulate and transport the air to the first air inlet end and/or the second air inlet end. An automobile comprising the air conditioning system is provided. By means of controlling the blocking and unblocking of the fresh air inlet, the first air outlet and the second air outlet, the normal operation of the air conditioning system in a heating mode and a cooling mode and the switching between the heating mode and the cooling mode arc achieved, thereby ensuring the normal operation of the air conditioning system.

## Description

### CROSS-REFERENCE TO RELATED APPLICATIONS

This application claims priority to Chinese Patent Application No. 202211313745.4, filed on October 25, 2022, the entire contents of which are incorporated herein by reference.

### TECHNICAL FIELD

The present application relates to the technical field of air conditioning, and in particular to an air conditioning system and a vehicle.

### BACKGROUND

The vehicle air conditioning system generally has three working modes: cooling, heating, and ventilation. During operation, fresh air needs to be introduced from the outside. In the cold winter, the outdoor ambient temperature is very low. Therefore, the temperature of the fresh air introduced from the outside by the air conditioner is also very low, which makes it difficult for the air conditioning system to quickly enter the working state and the heating rate is slow; while in the hot summer, the outdoor ambient temperature is very high. Therefore, the temperature of the fresh air introduced from the outside by the air conditioner is also very high, which makes it difficult for the air conditioning system to quickly enter the working state and the cooling rate is slow. Thus, the passengers are in extreme cold or extreme heat for a long time, affecting the user's experience.

### SUMMARY

The main purpose of the present application is to provide an air conditioning system, aiming to improve the heating or cooling rate of the air conditioning system.

To achieve the above purpose, the air conditioning system provided in the present application includes:
a first heat exchange air duct provided with a built-in evaporator, a first air inlet end and a first air outlet end, the first air inlet end is communicated with a fresh air inlet outside a vehicle, and the first air outlet end is communicated with a first air outlet port inside the vehicle;
a second heat exchange air duct provided with a built-in heater, a second air inlet end and a second air outlet end, the second air inlet end is communicated with the fresh air inlet and/or the first air inlet end, and the second air outlet end is communicated with a second air outlet port inside the vehicle; and
a circulating system including a circulation air inlet respectively communicated with an interior of the vehicle, the first air inlet end and/or the second air inlet end, so as to recycle an air after a heat exchange through the first heat exchange air duct and/or the second heat exchange air duct, and circulate and transport the air to the first air inlet end and/or the second air inlet end.

In an embodiment, the circulating system further includes a first circulation air duct communicated with the first heat exchange air duct, so as to recycle the air after the heat exchange through the first heat exchange air duct, and circulate and transport the air to the first air inlet end; and/or
the circulating system further includes a second circulation air duct communicated with the second heat exchange air duct, so as to recycle the air after the heat exchange through the second heat exchange air duct, and circulate and transport the air to the first air inlet end or the second air inlet end.

**In** an embodiment, the air conditioning system is provided with a heating mode, and the heating mode is provided with a first heating state;
in the first heating state, the fresh air inlet, the second air outlet port and the second circulation air duct are all in communication, and the circulation air inlet, the first air outlet port and the first circulation air duct are all plugged, so that an outside air is configured to enter the second heat exchange air duct from the fresh air inlet; and
after the heat exchange in the second heat exchange air duct, a part of the air is configured to enter the second circulation air duct and continue to circulate to the second air inlet end, and the other part of the air is configured to flow into the vehicle from the second air outlet port to heat the interior of the vehicle.

In an embodiment, the heating mode is further provided with a second heating state, and the first heating state is configured to be switched to the second heating state;
in the second heating state, the circulation air inlet, the fresh air inlet, the first air outlet port and the second air outlet port are all in communication, and the first circulation air duct and the second circulation air duct are all plugged, so that a part of the outside air entering from the fresh air inlet is configured to flow into the vehicle through the first air outlet port, and the other part of the outside air entering from the fresh air inlet is configured to flow into the vehicle after the heat exchange through the second heat exchange air duct and enter the air conditioning system again through the circulation air inlet; or
the heating mode is further provided with a second heating state, in the second heating state, the first heating state is configured to be switched to the second heating state, the circulation air inlet, the fresh air inlet and the second air outlet port are all in communication, the first air outlet port, the first circulation air duct and the second circulation air duct are all plugged, so that the outside air is configured to enter the second heat exchange air duct from the fresh air inlet, flow into the vehicle after the heat exchange, and enter the air conditioning system again through the circulation air inlet.

In an embodiment, the air conditioning system is further provided with a cooling mode, and the cooling mode is provided with a first cooling state; in the first cooling state, the circulation air inlet, the first air outlet port and the first circulation air duct are all in communication, and the fresh air inlet, the second air outlet port and the second circulation air duct are all plugged, so that a part of the air after the heat exchange through the first heat exchange air duct is configured to enter the first circulation air duct and continue to circulate to the first air inlet end, and the other part of the air after the heat exchange through the first heat exchange air duct is discharged into the vehicle through the first air outlet port and enter the air conditioning system again through the circulation air inlet after cooling the vehicle.

In an embodiment, the cooling mode is further provided with a second cooling state, and the first cooling state is configured to be switched to the second cooling state;
in the second cooling state, the circulation air inlet, the first air outlet port and the second air outlet port are all in communication, and the fresh air inlet, the first circulation air duct and the second circulation air duct are all plugged, so that the air entering the first heat exchange air duct is configured to flow into the vehicle through the first air outlet port and the second air outlet port respectively, and enter the air conditioning system again through the circulation air inlet; or
the cooling mode is further provided with a second cooling state, the first cooling state is configured to be switched to the second cooling state; and
in the second cooling state, the circulation air inlet and the first air outlet port are all in communication, and the fresh air inlet, the second air outlet port, the first circulation air duct and the second circulation air duct are all plugged, so that the air entering the first heat exchange air duct is configured to flow into the vehicle through the first air outlet port, and enter the air conditioning system again through the circulation air inlet system.

In an embodiment, the second air inlet end of the second heat exchange air duct is communicated with the first air outlet end of the first heat exchange air duct; and
a blower is provided at the first air inlet end, and an air blown out by the blower is configured to pass through the first air inlet end, the first air outlet end, and the second air inlet end in sequence.

In an embodiment, the air conditioning system further includes a ventilation duct, one end of the ventilation duct is communicated with the circulation air inlet, and the other end of the ventilation duct is communicated with the first air inlet end; and
an air outlet port of the first circulation air duct, an air outlet port of the second circulation air duct, and the fresh air inlet are all communicated with the first air inlet end and/or the second air inlet end through the ventilation duct, and the blower is provided in the ventilation duct.

In an embodiment, the second heat exchange air duct is sleeved in the first heat exchange air duct, and the second air outlet port is ringed in the first air outlet port.

In an embodiment, the circulation air inlet, the fresh air inlet, the first air outlet port, the second air outlet port, the first circulation air duct and the second circulation air duct are all provided with switching valves; and
the switching valves are configured to respectively control opening and closing of the circulation air inlet, the fresh air inlet, the first air outlet port, the second air outlet port, the first circulation air duct and the second circulation air duct, and adjust an inlet/outlet air ratio of the circulation air inlet, the fresh air inlet, the first air outlet port, the second air outlet port, the first circulation air duct and the second circulation air duct.

The present application also provides a vehicle, including a vehicle body and the air conditioning system, and the air conditioning system is provided on the vehicle body.

In the technical solution of the present application, the first heat exchange air duct and the second heat exchange air duct are provided. The first heat exchange air duct is provided with a built-in evaporator, and the first heat exchange air duct is provided with a first air inlet end and a first air outlet end. The first air inlet end is communicated with the fresh air inlet outside the vehicle, and the first air outlet end is communicated with the first air outlet port inside the vehicle. The second heat exchange air duct is provided with a built-in heater, and the second heat exchange air duct is provided with a second air inlet end and a second air outlet end. The second air inlet end is communicated with the fresh air inlet and/or the first air inlet end, and the second air outlet end is communicated with the second air outlet port inside the vehicle. By controlling the communication and plugging of the fresh air inlet, the first air outlet port, and the second air outlet port, the normal operation of the air conditioning system in the heating mode and the cooling mode, as well as the mutual switching between the two modes, are achieved, thereby ensuring the normal operation of the air conditioning system.

However, in actual working process, especially in extremely cold or hot seasons, the work of evaporator and the heater in the air conditioning system is often affected, and the work efficiency of both is reduced. As a result, it is difficult for the air conditioning system to cool down or heat up quickly, which takes longer time for the temperature in the vehicle to reach a comfortable temperature, prolongs the waiting time of passengers, and affects the experience of users. Therefore, the circulating system is provided, which includes the circulation air inlet communicated with the interior of the vehicle, and the circulation air inlet is communicated with the first air inlet end and/or the second air inlet end respectively. Since the circulation air inlet, the first air outlet port and the second air outlet port are all communicated with the interior of the vehicle, the air flowing out of the first air outlet port and/or the second air outlet port flows into the circulation air inlet again after heat exchange in the vehicle, and is transported to the first air inlet end and/or the second air inlet end by the circulation air inlet again. The air cooled by the evaporator is recycled into the first air inlet end, thereby reducing the temperature of the air entering the first heat exchange air duct and assisting the evaporator in heat exchange, promoting the rapid cooling of the air conditioning system; or the air heated by the heater is recycled into the second heat exchange air duct, increasing the temperature of the air entering the second heat exchange air duct, assisting the heater in heating, and promoting the rapid heating of the air conditioning system. Thus, the time required for the temperature in the vehicle to reach a comfortable temperature is reduced, the waiting time of passengers is reduced, and the experience of users is improved.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a schematic structural view of an air conditioning system in a first heating state of a heating mode according to an embodiment of the present application.
FIG. 2 is a schematic structural view of the air conditioning system in a second heating state of the heating mode in FIG. 1.
FIG. 3 is a schematic structural view of the air conditioning system in a first cooling state of a cooling mode in FIG. 1.
FIG. 4 is a schematic structural view of the air conditioning system in a second cooling state of the cooling mode in FIG. 1.

### Description of reference signs:

| Reference sign | name | Reference sign | name |
|---|---|---|---|
| 10 | first heat exchange air duct | 42 | second air inlet end |
| 11 | evaporator | 43 | second air outlet end |
| 12 | first air inlet end | 44 | second air outlet port |
| 13 | first air outlet end | 50 | first circulation air duct |
| 14 | first air outlet port | 60 | second circulation air duct |
| 20 | circulation air inlet | 70 | ventilation duct |
| 30 | fresh air inlet | 80 | blower |
| 40 | second heat exchange air duct | 90 | switching valve |
| 41 | heater | | |

The realization of the objective, functional characteristics, and advantages of the present application are further described with reference to the accompanying drawings and in conjunction with the embodiments.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

It should be noted that if there are directional indications, such as up, down, left, right, front, back, etc, involved in the embodiments of the present application, the directional indications are only used to explain the relative positional relationship and movement of various components in a specific posture as shown in the accompanying drawings. If the specific posture changes, the directional indication also changes accordingly.

In addition, if there are descriptions related to "first", "second", etc. in the embodiments of the present application, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. Besides, the meaning of "and/or" appearing in the application includes three parallel scenarios. For example, "A and/or B" includes only A, or only B, or both A and B. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of protection claimed in the present application.

The present application provides an air conditioning system.

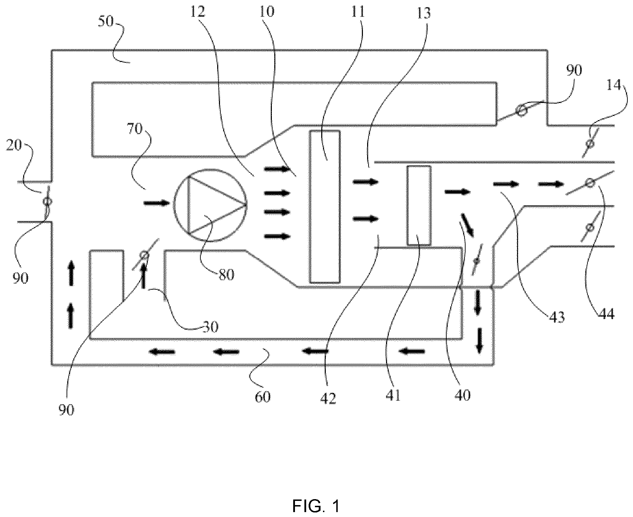

In an embodiment of the present application, as shown in FIG. 1 to FIG. 4, the air conditioning system includes a first heat exchange air duct 10, a second heat exchange air duct 40 and a circulating system. The first heat exchange air duct 10 is provided with a built-in evaporator 11, and the first heat exchange air duct 10 is provided with a first air inlet end 12 and a first air outlet end 13. The first air inlet end 12 is communicated with a fresh air inlet 30 outside the vehicle, and the first air outlet end 13 is communicated with a first air outlet port 14 inside the vehicle. The second heat exchange air duct 40 is provided with a built-in heater 41, and the second heat exchange air duct 40 is provided with a second air inlet end 42 and a second air outlet end 43. The second air inlet end 42 is communicated with the fresh air inlet 30 and/or the first air inlet end 12, and the second air outlet end 43 is communicated with the second air outlet port 44 inside the vehicle. The circulating system includes a circulation air inlet 20 communicated with the interior of the vehicle, and the circulation air inlet 20 is communicated with the first air inlet end 12 and/or the second air inlet end 42 respectively, so as to recycle the air after heat exchange through the first heat exchange air duct 10 and/or the second heat exchange air duct 40, and circulate and transport the air to the first air inlet end 12 and/or the second air inlet end 42.

In an embodiment, the air conditioning system is fixed to the vehicle body, and the first heat exchange air duct 10 is provided with an evaporator 11. In the cooling mode, fresh air formed by filtering the external air through the vehicle air filtration system enters the first heat exchange air duct 10 through the fresh air inlet 30, and the air cooled by the first heat exchange air duct 10 passes through the first air outlet end 13 and is discharged into the vehicle through the first air outlet port 14 to cool the vehicle. The second heat exchange air duct 40 is provided with a heater 41 configured to heat the air in the second heat exchange air duct 40. Therefore, in the heating mode, fresh air formed by filtering the external air through the vehicle air filtration system enters the second heat exchange air duct 40 through the fresh air inlet 30, and the air heated by the second heat exchange air duct 40 passes through the second air outlet end 43 and is discharged into the vehicle through the second air outlet port 44 to heat the vehicle.

However, in actual operation, especially in extremely cold or hot seasons, such as in cold winter, the outdoor ambient temperature is very low, thus the temperature of the fresh air introduced from the outside by the second heat exchange air duct 40 is also very low, which is not conducive to the heating of the heater 41, resulting in the air conditioning system being difficult to heat up quickly and the heating rate being slow; while in hot summer, the outdoor ambient temperature is very high, thus the temperature of the fresh air introduced from the outside by the air conditioning system is also very high, which is not conducive to the heat exchange of the evaporator 11, resulting in the air conditioning system being difficult to cool down quickly and the cooling rate being slow. This makes it take longer for the temperature inside the vehicle to a comfortable temperature, prolongs the waiting time of passengers, and affects the experience of users. Therefore, a circulating system is provided, which includes a circulation air inlet 20 communicated with the interior of the vehicle, and the circulation air inlet 20 is communicated with the first air inlet end 12 and the second air inlet end 42 respectively, so as to recycle the air after heat exchange through the first heat exchange air duct 10 and/or the second heat exchange air duct 40, and reduce the inlet air temperature of the evaporator 11 or increase the inlet air temperature of the heater 41 within a period of time after the air conditioning system is started, thereby promoting the air conditioning system to quickly enter the working state.

In this embodiment, since the circulation air inlet 20, the first air outlet port 14 and the second air outlet port 44 are all communicated with the interior of the vehicle, and the circulation air inlet 20 is communicated with the first air inlet end 12 and/or the second air inlet end 42 respectively. That is, the first air inlet end 12 is communicated with the circulation air inlet 20 and the fresh air inlet 30 respectively, and the second air inlet end 42 is communicated with the circulation air inlet 20 and the fresh air inlet 30 respectively. The air flowing out of the first air outlet port 14 and/or the second air outlet port 44 flows into the circulation air inlet 20 again after heat exchange in the vehicle, and is transported to the first air inlet end 12 and/or the second air inlet end 42 again by the circulation air inlet 20.

In another embodiment, the circulating system includes a first circulation air duct 50 communicated with the first heat exchange air duct 10, so as to recycle the air after heat exchange through the first heat exchange air duct 10 and circulate the air to the first air inlet end 12. Specifically, the air inlet port of the first circulation air duct 50 is communicated with the first air outlet end 13, and the air outlet port of the first circulation air duct 50 is communicated with the first air inlet end 12, so that the air cooled by the evaporator 11 is recycled into the first circulation air duct 50, and the air is circulated again to the first air inlet end 12 by the first circulation air duct 50, so as to reduce the temperature of the air entering the first heat exchange air duct 10 and assist the evaporator 11 in heat exchange, thereby promoting the rapid cooling of the air conditioning system.

In another embodiment, the circulating system further includes a second circulation air duct 60 communicated with the second heat exchange air duct 40, so as to recycle the air after heat exchange by the second heat exchange air duct 40, and circulate and transport the air to the first air inlet end 12 or the second air inlet end 42. Specifically, the air inlet port of the second circulation air duct 60 is communicated with the second air outlet end 43, and the air outlet port of the second circulation air duct 60 is communicated with the first air inlet end 12 or the second air inlet end 42, so that the air heated by the heater 41 is recycled into the second circulation air duct 60, and is circulated again from the second circulation air duct 60 to the second heat exchange air duct 40, so as to increase the temperature of the air entering the second heat exchange air duct 40, and assist the heater 41 in heating, thereby promoting rapid temperature rise of the air conditioning system.

Compared with only using the circulation air inlet 20 to recycle the air flowing out of the first air outlet port 14 and/or the second air outlet port 44, the first circulation air duct 50 and the second circulation air duct 60 are additionally provided to speed up the air recycling efficiency and further speed up the heating rate or cooling rate of the air conditioning system. By controlling the on/off of the first circulation air duct 50 and the on/off of the second circulation air duct 60, the switching of different working modes or states of the air conditioning system can be adapted. Moreover, the communication and plugging of the circulation air inlet 20, the fresh air inlet 30, the first air outlet port 14, and the second air outlet port 44 can be adjusted according to the switching of different working modes or states of the air conditioning system.

It should be noted that the "communicated with" in the present application only indicates the connection relationship between different ducts, and does not represent their communicated status. Whether they are communicated with is determined by their corresponding control switches, or whether each air duct is controlled by plugging. In this embodiment, the first air outlet end 13 represents a section of the air duct after the evaporator 11 and before the first air outlet port 14; the first air inlet end 12 represents a section of the air duct before the evaporator 11. The second air outlet end 43 represents a section of the air duct after the heater 41 and before the second air outlet port 44, and the second air inlet end 42 represents a section of the air duct before the heater 41. The second air inlet end 42 is communicated with the circulation air inlet 20 and the fresh air inlet 30 respectively, which means that the second air inlet end 42 is directly communicated with the circulation air inlet 20 and the fresh air inlet 30, that is, the circulation air inlet 20 and the fresh air inlet 30 are directly provided in the second air inlet end 42. Alternatively, the second air inlet end 42 is indirectly connected with the circulation air inlet 20 and the fresh air inlet 30, for example, the second air inlet end 42 is connected to the circulation air inlet 20 and the fresh air inlet 30 respectively through the preset air duct. In this embodiment, the second air inlet end 42 is connected to the circulation air inlet 20 and the fresh air inlet 30 respectively through the first air inlet end 12.

In the technical solution of the present application, the first heat exchange air duct 10 and the second heat exchange air duct 40 are provided. The first heat exchange air duct 10 is provided with the built-in evaporator 11, and the first heat exchange air duct 10 is provided with the first air inlet end 12 and the first air outlet end 13. The first air inlet end 12 is communicated with the fresh air inlet 30 outside the vehicle, and the first air outlet end 13 is communicated with the first air outlet port 14 inside the vehicle. The second heat exchange air duct 40 is provided with the built-in heater 41, and the second heat exchange air duct 40 is provided with the second air inlet end 42 and the second air outlet end 43. The second air inlet end 42 is communicated with the fresh air inlet 30 and/or the first air inlet end 42, and the second air outlet end 43 is communicated with the second air outlet port 44 inside the vehicle. By controlling the communication and plugging of the fresh air inlet 30, the first air outlet port 14, and the second air outlet port 44, the normal operation of the air conditioning system in the heating mode and the cooling mode, as well as the switching between the two modes, are achieved to ensure the normal operation of the air conditioning system.

However, in the actual operation process, especially in extremely cold or hot seasons, the operation of the evaporator 11 and the heater 41 in the air conditioning system is often affected, reducing the working efficiency of the evaporator 11 and the heater 41. This makes it difficult for the air conditioning system to cool down or heat up quickly, and makes the time for the temperature in the vehicle to the comfortable temperature longer, prolongs the waiting time of passengers, and affects the user's experience. Therefore, the circulating system provided, which includes the circulation air inlet 20 communicated with the interior of the vehicle, and the circulation air inlet 20 is communicated with the first air inlet end 12 and/or the second air inlet end 42 respectively. Since the circulation air inlet 20, the first air outlet port 14 and the second air outlet port 44 are all communicated with the interior of the vehicle, the air flowing out of the first air outlet port 14 and/or the second air outlet port 44 flows into the circulation air inlet 20 again after heat exchange in the vehicle, and is transported by the circulation air inlet 20 to the first air inlet end 12 and/or the second air inlet end 42 again. The air cooled by the evaporator 11 is recycled into the first air inlet end 12, thereby reducing the temperature of the air entering the first heat exchange air duct 10 and assisting the evaporator 11 in heat exchange, promoting the rapid cooling of the air conditioning system; or the air heated by the heater 41 is recycled into the second heat exchange air duct 40, increasing the temperature of the air entering the second heat exchange air duct 40, and assisting the heater 41 in heating, promoting the rapid heating of the air conditioning system. Thus, the time required for the temperature in the vehicle to the comfortable temperature is reduced, the waiting time of passengers is reduced, and the experience of users is improved.

Referring to FIG. 1, in an embodiment, the air conditioning system is provided with a heating mode, and the heating mode is provided with a first heating state.

In the first heating state, the fresh air inlet 30, the second air outlet port 44, and the second circulation air duct 60 are all in communication, and the circulation air inlet 20, the first air outlet port 14, and the first circulation air duct 50 are all plugged, so that the air outside the vehicle enters the second heat exchange air duct 40 through the fresh air inlet 30. After the heat exchange in the second heat exchange air duct 40, a part of the air enters the second circulation air duct 60 to continue to circulate to the second air inlet end 42, and the other part of the air flows into the vehicle through the second air outlet port 44 to heat the interior of the vehicle. Specifically, fresh air outside the vehicle enters the second heat exchange air duct 40 through the fresh air inlet 30. After heated by the heater 41, a part of the fresh air enters the second circulation air duct 60 through the second air outlet end 43. One end of the second circulation air duct 60 is communicated with the second air outlet end 43, and the other end of the second circulation air duct 60 is communicated with the ventilation duct 70, so that the air is circulated to the first air inlet end 12 through the second circulation air duct 60, and flows from the first air inlet end 12 to the second air inlet end 42 together with the air at the fresh air inlet 30. Then, the air is circulated to the second heat exchange air duct 40 again, so that the temperature of the air entering the second air inlet end 42 is increased, thereby increasing the inlet air temperature of the second heat exchange air duct 40, reducing heat waste, reducing the power required for the heater 41 to work, and assisting the air conditioning system to heat up. Another part of the air is discharged into the vehicle through the second air outlet port 44 to heat up the interior of the vehicle.

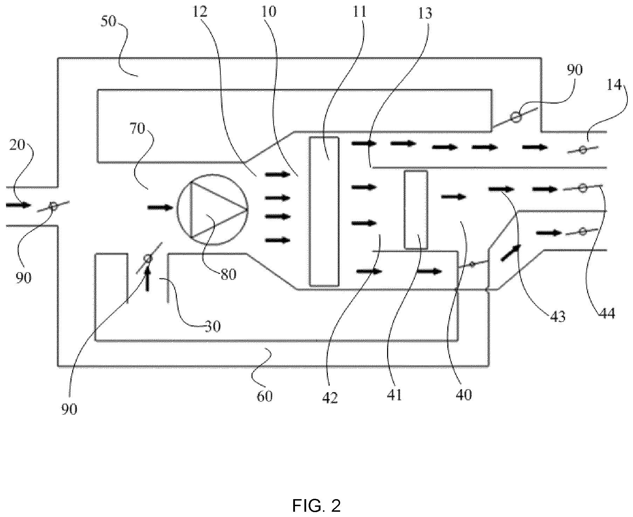

Referring to FIG. 2, in an embodiment, the heating mode is further provided with a second heating state. The first heating state can be switched to the second heating state. In the second heating state, the circulation air inlet 20, the fresh air inlet 30, the first air outlet port 14 and the second air outlet port 44 are all in communication, and the first circulation air duct 50 and the second circulation air duct 60 are both plugging, so that after the outside air enters the vehicle through the fresh air inlet 30, a part of the air flows into the vehicle through the first air outlet port 14, the other part of the air flows into the vehicle after heat exchange through the second heat exchange air duct 40, and enters the air conditioning system again through the circulation air inlet 20 together. Specifically, after the air conditioning system has been working for a period of time, the circulation air inlet 20 and the first air outlet port 14 are opened, the second circulation air duct 60 is closed, and the first heating state is switched to the second heating state, so that after the outside air enters the fresh air inlet 30, a part of the air flows into the second heat exchange air duct 40 from the second air inlet end 42, and flows into the vehicle from the second air outlet port 44 after heat exchange through the second heat exchange air duct 40, thereby heating the air in the vehicle. The other part of the air flows into the first heat exchange air duct 10 from the first air inlet end 12, and flows into the vehicle from the first air outlet port 14 after heat exchange through the first heat exchange air duct 10, which is configured to adjust the air temperature flowing out from the second air outlet port 44, so that the air temperature discharged into the vehicle by the air conditioning system is always at the comfortable temperature suitable for passengers.

In another embodiment, the heating mode is further provided with a second heating state. In the second heating state, the first heating state can be switched to the second heating state, the circulation air inlet 20, the fresh air inlet 30 and the second air outlet port 44 are all in communication, the first air outlet port 14, the first circulation air duct 50 and the second circulation air duct 60 are all plugged, so that the air outside the vehicle enters the second heat exchange air duct 40 from the fresh air inlet 30 for heat exchange and then flows into the vehicle, and enters the air conditioning system again from the circulation air inlet 20. Specifically, after the air conditioning system has been working for a period of time, the circulation air inlet 20 is opened and the second circulation air duct 60 is closed, and the first heating state is switched to the second heating state, so that the outside air enters the fresh air inlet 30, flows into the second heat exchange air duct 40 through the second air inlet end 42, and flows into the vehicle through the second air outlet port 44 after heat exchange through the second heat exchange air duct 40, thereby heating the air inside the vehicle. The working power of the heater 41 is adjustable, so as to control the air temperature discharged into the vehicle by the air conditioning system, so that the air entering the vehicle is always at the comfortable temperature suitable for passengers.

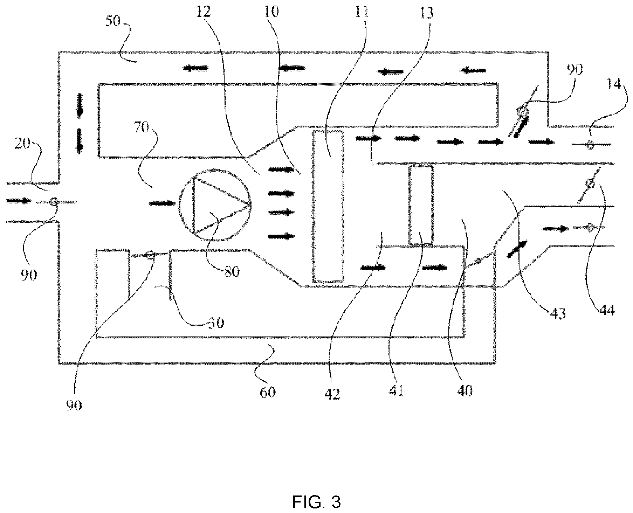

Referring to FIG. 3, in an embodiment, the air conditioning system is further provided with a cooling mode, and the cooling mode is provided with a first cooling state. In the first cooling state, the circulation air inlet 20, the first air outlet port 14, and the first circulation air duct 50 are all in communication, and the fresh air inlet 30, the second air outlet port 44, and the second circulation air duct 60 are all plugged, so that after the air exchanges heat through the first heat exchange air duct 10, a part of the air enters the first circulation air duct 50 and continues to circulate to the first air inlet end 12. The other part of the air is discharged into the vehicle through the first air outlet port 14, and enters the air conditioning system again through the circulation air inlet 20 after cooling the interior of the vehicle. Specifically, the air enters the first heat exchange air duct 10, and enters the first circulation air duct 50 through the first air outlet end 13 after being cooled by the evaporator 11. One end of the first circulation air duct 50 is communicated with the first air outlet end 13, and the other end of the first circulation air duct 50 is communicated with the ventilation duct 70, so that a part of the air is circulated to the first air inlet end 12 through the first circulation air duct 50, and the other part of the air is discharged into the vehicle through the first air outlet port 14 to cool the air in the vehicle. The air from the circulation air inlet 20 and the air outlet end of the first circulation air duct 50 are circulated to the first heat exchange air duct 10 again, so that the temperature of the air entering the first air inlet end 12 is reduced, thereby reducing the inlet air temperature of the first heat exchange air duct 10, reducing energy waste, reducing the power required for the evaporator 11 to work, and assisting the air conditioning system to cool down.

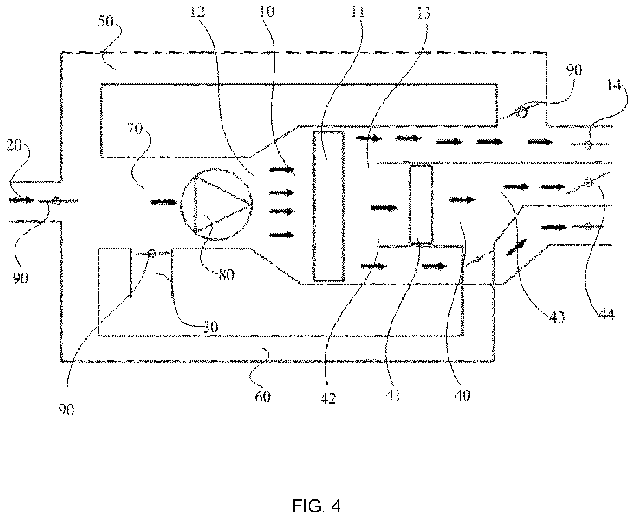

Referring to FIG. 4, in an embodiment, the cooling mode is further provided with a second cooling state, and the first cooling state can be switched to the second cooling state. In the second cooling state, the circulation air inlet 20, the first air outlet port 14, and the second air outlet port 44 are all in communication, and the fresh air inlet 30, the first circulation air duct 50, and the second circulation air duct 60 are all plugged, so that the air entering the first heat exchange air duct 10 respectively flows into the vehicle through the first air outlet port 14 and the second air outlet port 44, and enters the air conditioning system again through the circulation air inlet 20. Specifically, after the air conditioning system has been working for a period of time, the first air outlet port 14 is adjusted to open, the first circulation air duct 50 is closed, and the first cooling state is switched to the second cooling state, so that a part of the air enters the first heat exchange air duct 10, is cooled by the evaporator 11, and is discharged into the vehicle, thereby cooling the air in the vehicle. The other part of the air flows into the second heat exchange air duct 40 from the second air inlet end 42, and flows into the vehicle from the second air outlet port 44 after heat exchange in the second heat exchange air duct 40, which is configured to adjust the temperature of the air flowing out of the first air outlet port 14, so that the temperature of the air discharged into the vehicle by the air conditioning system is always at the comfortable temperature suitable for passengers.

In another embodiment, the cooling mode is further provided with a second cooling state, and the first cooling state can be switched to the second cooling state. In the second cooling state, the circulation air inlet 20 and the first air outlet port 14 are in communication, and the fresh air inlet 30, the second air outlet port 44, the first circulation air duct 50 and the second circulation air duct 60 are plugged, so that the air entering the first heat exchange air duct 10 flows into the vehicle through the first air outlet port 14 and enters the air conditioning system again through the circulation air inlet 20. Specifically, after the air conditioning system has been working for a period of time, the circulation air inlet 20 is adjusted to open, the second circulation air duct 60 and the second air outlet port 44 are closed, and the first cooling state is switched to the second cooling state, so that the air enters the first heat exchange air duct 10, and is cooled by the evaporator 11 and discharged into the vehicle, thereby cooling the air in the vehicle. The working power of the evaporator 11 is adjustable, so as to control the air temperature discharged into the vehicle by the air conditioning system, so that the air entering the vehicle is always at the comfortable temperature suitable for passengers.

With reference to FIG. 1 to FIG. 4, in an embodiment, the second air inlet end 42 of the second heat exchange air duct 40 is communicated with the first air outlet end 13 of the first heat exchange air duct 10, and a blower 80 is provided at the first air inlet end 12. The air blown out by the blower 80 passes through the first air inlet end 12, the first air outlet end 13, and the second air inlet end 42 in sequence. Specifically, the second air inlet end 42 of the second heat exchange air duct 40 is communicated with the first air outlet end 13 of the first heat exchange air duct 10, that is, the second heat exchange air duct 40 is located behind the first heat exchange air duct 10, and the second air inlet end 42 is communicated with the circulation air inlet 20 and the fresh air inlet 30 through the first heat exchange air duct 10. The blower 80 is provided at the first air inlet end 12, and the air blown by the blower 80 passes through the first air inlet end 12, the first air outlet end 13, and the second air inlet end 42 in sequence. The blower 80 is configured to drive the air in the first heat exchange air duct 10 and the second heat exchange air duct 40 to flow at the same time, thereby saving the consumption of the blower 80, reducing the installation process, and further reducing the overall power loss of the air conditioning system.

In another embodiment, the blower 80 may be respectively provided at the first air inlet end 12 of the first heat exchange air duct 10 and the second air inlet end 42 of the second heat exchange air duct 40, so as to drive the air in the first heat exchange air duct 10 and the second heat exchange air duct 40 to flow respectively, and accelerate the air flow in the air conditioning system.

Further, in an embodiment, the second heat exchange air duct 40 is sleeved in the first heat exchange air duct 10, and the second air outlet port 44 is ringed in the first air outlet port 14. Specifically, the second heat exchange air duct 40 is sleeved in the first heat exchange air duct 10, so that the air after heat exchange through the first heat exchange air duct 10 and the air after heat exchange through the second heat exchange air duct 40 are discharged from the same duct together. The air in the first heat exchange air duct 10 and the air in the second heat exchange air duct 40 are mixed when the air is discharged into the vehicle, so that the air conditioning system discharges air with uniform temperature.

In an embodiment, the air conditioning system further includes a ventilation duct 70. One end of the ventilation duct 70 is communicated with the circulation air inlet 20, and the other end of the ventilation duct 70 is communicated with the first air inlet end 12. The air outlet port of the first circulation air duct 50, the air outlet port of the second circulation air duct 60, and the fresh air inlet 30 are all communicated with the first air inlet end 12 and/or the second air inlet end 42 through the ventilation duct 70, and the blower 80 is provided in the ventilation duct 70. Specifically, one end of the ventilation duct 70 is communicated with the circulation air inlet 20. The other end of the ventilation duct 70 is communicated with the first air inlet end 12, and is communicated with the second air inlet end 42 through the first heat exchange air duct 10, so that the circulation air inlet 20 is respectively communicated with the first air inlet end 12 and/or the second air inlet end 42. The ventilation duct 70 is respectively communicated with the air outlet port of the first circulation air duct 50 and the air outlet port of the second circulation air duct 60, and is located between the first air inlet end 12 and the circulation air inlet 20, so that the air outlet port of the first circulation air duct 50 and the air outlet port of the second circulation air duct 60 are communicated with the first air inlet end 12 and the second air inlet end 42 through the ventilation duct 70. The fresh air inlet 30 is also opened in the ventilation duct 70 and is located between the first air inlet end 12 and the circulation air inlet 20, so that the fresh air inlet 30 is communicated with the first air inlet end 12 and the second air inlet end 42 through the ventilation duct 70, and the blower 80 is provided in the ventilation duct 70.

Referring to FIG. 1 to FIG. 4, in an embodiment, the circulation air inlet 20, the fresh air inlet 30, the first air outlet port 14, the second air outlet port 44, the first circulation air duct 50, and the second circulation air duct 60 are all provided with a switching valve 90. The plurality of switching valves 90 respectively control the opening and closing of the circulation air inlet 20, the fresh air inlet 30, the first air outlet port 14, the second air outlet port 44, the first circulation air duct 50, and the second circulation air duct 60, and can adjust the inlet/outlet air ratio of the circulation air inlet 20, the fresh air inlet 30, the first air outlet port 14, the second air outlet port 44, the first circulation air duct 50, and the second circulation air duct 60. Specifically, the circulation air inlet 20, the fresh air inlet 30, the first air outlet port 14, the second air outlet port 44, the first circulation air duct 50 and the second circulation air duct 60 are all provided with a switching valve 90, so as to control the flow direction of the air and facilitate the mutual conversion of the air conditioning system in different modes and/or states. Moreover, since the switching valves 90 at the circulation air inlet 20, the fresh air inlet 30, the first air outlet port 14, the second air outlet port 44, the first circulation air duct 50 and the second circulation air duct 60 are all stepless control valves, the opening sizes of the circulation air inlet 20, the fresh air inlet 30, the first air outlet port 14, the second air outlet port 44, the first circulation air duct 50 and the second circulation air duct 60 are controlled by rotating the tilt angle of the switching valve 90, thereby controlling the inlet air ratio of the circulation air inlet 20, the fresh air inlet 30, the first air outlet port 14, the second air outlet port 44, the first circulation air duct 50 and the second circulation air duct 60.

The present application also provides a vehicle, which includes the vehicle body and the air conditioning system. The specific structure of the air conditioning system refers to the above embodiments. Since the vehicle adopts all the technical solutions of the above embodiments, it at least has all the beneficial effects brought by the technical solutions of the above embodiments, which will not be described one by one here. The air conditioning system is provided on the vehicle body to adjust the air temperature inside the vehicle.

The above descriptions are only embodiments of the present application, and are not intended to limit the scope of the present application. Under the inventive concept of the present application, any equivalent structural transformations made by using the contents of the description and drawings of the present application, or direct/indirect applications in other related technical fields, are included in the scope of the present application.

## Claims

1. An air conditioning system, **characterized by** comprising:
a first heat exchange air duct provided with a built-in evaporator, a first air inlet end and a first air outlet end, wherein the first air inlet end is communicated with a fresh air inlet outside a vehicle, and the first air outlet end is communicated with a first air outlet port inside the vehicle;
a second heat exchange air duct provided with a built-in heater, a second air inlet end and a second air outlet end, wherein the second air inlet end is communicated with the fresh air inlet and/or the first air inlet end, and the second air outlet end is communicated with a second air outlet port inside the vehicle; and
a circulating system comprising a circulation air inlet respectively communicated with an interior of the vehicle, the first air inlet end and/or the second air inlet end, so as to recycle an air after a heat exchange through the first heat exchange air duct and/or the second heat exchange air duct, and circulate and transport the air to the first air inlet end and/or the second air inlet end.

2. The air conditioning system according to claim 1, wherein the circulating system further comprises a first circulation air duct communicated with the first heat exchange air duct, so as to recycle the air after the heat exchange through the first heat exchange air duct, and circulate and transport the air to the first air inlet end; and/or
the circulating system further comprises a second circulation air duct communicated with the second heat exchange air duct, so as to recycle the air after the heat exchange through the second heat exchange air duct, and circulate and transport the air to the first air inlet end or the second air inlet end.

3. The air conditioning system according to claim 2, wherein the air conditioning system is provided with a heating mode, and the heating mode is provided with a first heating state;
in the first heating state, the fresh air inlet, the second air outlet port and the second circulation air duct are all in communication, and the circulation air inlet, the first air outlet port and the first circulation air duct are all plugged, so that an outside air is configured to enter the second heat exchange air duct from the fresh air inlet; and
after the heat exchange in the second heat exchange air duct, a part of the air is configured to enter the second circulation air duct and continue to circulate to the second air inlet end, and the other part of the air is configured to flow into the vehicle from the second air outlet port to heat the interior of the vehicle.

4. The air conditioning system according to claim 3, wherein the heating mode is further provided with a second heating state, and the first heating state is configured to be switched to the second heating state;
in the second heating state, the circulation air inlet, the fresh air inlet, the first air outlet port and the second air outlet port are all in communication, and the first circulation air duct and the second circulation air duct are all plugged, so that a part of the outside air entering from the fresh air inlet is configured to flow into the vehicle through the first air outlet port, and the other part of the outside air entering from the fresh air inlet is configured to flow into the vehicle after the heat exchange through the second heat exchange air duct and enter the air conditioning system again through the circulation air inlet; or
the heating mode is further provided with a second heating state, in the second heating state, the first heating state is configured to be switched to the second heating state, the circulation air inlet, the fresh air inlet and the second air outlet port are all in communication, the first air outlet port, the first circulation air duct and the second circulation air duct are all plugged, so that the outside air is configured to enter the second heat exchange air duct from the fresh air inlet, flow into the vehicle after the heat exchange, and enter the air conditioning system again through the circulation air inlet.

5. The air conditioning system according to claim 2, wherein the air conditioning system is further provided with a cooling mode, and the cooling mode is provided with a first cooling state; in the first cooling state, the circulation air inlet, the first air outlet port and the first circulation air duct are all in communication, and the fresh air inlet, the second air outlet port and the second circulation air duct are all plugged, so that a part of the air after the heat exchange through the first heat exchange air duct is configured to enter the first circulation air duct and continue to circulate to the first air inlet end, and the other part of the air after the heat exchange through the first heat exchange air duct is discharged into the vehicle through the first air outlet port and enter the air conditioning system again through the circulation air inlet after cooling the vehicle.

6. The air conditioning system according to claim 5, wherein the cooling mode is further provided with a second cooling state, and the first cooling state is configured to be switched to the second cooling state;
in the second cooling state, the circulation air inlet, the first air outlet port and the second air outlet port are all in communication, and the fresh air inlet, the first circulation air duct and the second circulation air duct are all plugged, so that the air entering the first heat exchange air duct is configured to flow into the vehicle through the first air outlet port and the second air outlet port respectively, and enter the air conditioning system again through the circulation air inlet; or
the cooling mode is further provided with a second cooling state, the first cooling state is configured to be switched to the second cooling state; and in the second cooling state, the circulation air inlet and the first air outlet port are all in communication, and the fresh air inlet, the second air outlet port, the first circulation air duct and the second circulation air duct are all plugged, so that the air entering the first heat exchange air duct is configured to flow into the vehicle through the first air outlet port, and enter the air conditioning system again through the circulation air inlet system.

7. The air conditioning system according to claim 2, wherein the second air inlet end of the second heat exchange air duct is communicated with the first air outlet end of the first heat exchange air duct; and
a blower is provided at the first air inlet end, and an air blown out by the blower is configured to pass through the first air inlet end, the first air outlet end, and the second air inlet end in sequence.

8. The air conditioning system according to claim 7, further comprising a ventilation duct, wherein one end of the ventilation duct is communicated with the circulation air inlet, and the other end of the ventilation duct is communicated with the first air inlet end; and
an air outlet port of the first circulation air duct, an air outlet port of the second circulation air duct, and the fresh air inlet are all communicated with the first air inlet end and/or the second air inlet end through the ventilation duct, and the blower is provided in the ventilation duct.

9. The air conditioning system according to claim 7, wherein the second heat exchange air duct is sleeved in the first heat exchange air duct, and the second air outlet port is ringed in the first air outlet port.

10. The air conditioning system according to claim 2, wherein the circulation air inlet, the fresh air inlet, the first air outlet port, the second air outlet port, the first circulation air duct and the second circulation air duct are all provided with switching valves; and
the switching valves are configured to respectively control opening and closing of the circulation air inlet, the fresh air inlet, the first air outlet port, the second air outlet port, the first circulation air duct and the second circulation air duct, and adjust an inlet/outlet air ratio of the circulation air inlet, the fresh air inlet, the first air outlet port, the second air outlet port, the first circulation air duct and the second circulation air duct.

11. A vehicle, **characterized by** comprising a vehicle body and the air conditioning system according to any one of claims 1 to 10, wherein the air conditioning system is provided on the vehicle body.
